# EUROPEAN PATENT SPECIFICATION

(11) **EP 0 563 927 B1**
(45) Date of publication and mention of the grant of the patent: **13.05.1998**
(21) Application number: 93105349.0
(22) Date of filing: 31.03.1993
(51) Int. Cl.: G11B 17/26

(54) **Disk changer player**
Mit Plattenwechsler versehener Plattenspieler
Tourne-disque à changeur

(30) Priority: 31.03.1992 JP 106003/92; 31.03.1992 JP 106004/92
(43) Date of publication of application: 06.10.1993
(73) Proprietor: SONY CORPORATION, Tokyo (JP)
(72) Inventor: Kumakura, Junzo, c/o Sony Corporation, Shinagawa-ku, Tokyo (JP)
(74) Representative: Körber, Wolfhart, Dr.rer.nat.

(56) References cited:
- EP-A- 0 109 711
- EP-A- 0 265 809
- DE-A- 3 807 179
- PATENT ABSTRACTS OF JAPAN vol. 12, no. 220 (P-720) 23 June 1988 & JP-A-63 016 463 (SANYO ELECTRIC CO LTD) 23 January 1988
- PATENT ABSTRACTS OF JAPAN vol. 11, no. 324 (P-628) 22 October 1987 & JP-A-62 109 258 (KATO DENKI K.K.) 20 May 1987
- PATENT ABSTRACTS OF JAPAN vol. 7, no. 101 (P-194) 28 April 1983 & JP-A-58 023 358 (SONY K.K.) 12 February 1983
- PATENT ABSTRACTS OF JAPAN vol. 13, no. 116 (P-845) 22 March 1989 & JP-A-63 291 254 (MATSUSHITA ELECTRIC IND CO LTD) 29 November 1988

## Description

### FIELD OF THE INVENTION

The present invention relates to a disk changer player and more particularly is suitable to be applied to a reproducing apparatus adapted to selectively reproduce a desired disk recording medium of a plurality of stored disk recording mediums.

As a disk reproducing apparatus adapted to selectively reproduce a desired disk of a plurality of stored disk-like recording mediums (hereinafter referred to as disk), one using a method disclosed for example in Japanese Utility Model Application Laid-Open No. 62-195257 has been known, where a plurality of disks are previously stored in a stocker which is attachable/detachable to/from the disk reproducing apparatus and the stocker is mounted on the disk reproducing apparatus.

In the above mentioned method, however, the stocker must be attached/detached every time when a disk is to be changed, resulting in a problem that its operability is unfavorable.

As a method for solving this problem, there is a construction as disclosed for example in Japanese Patent Application Laid-Open No. 3-83263 in which a stocker accommodating a plurality of sub-trays for holding disks is provided internally of the disk reproducing apparatus and at the same time a main tray for taking/putting out/in of disks is provided.

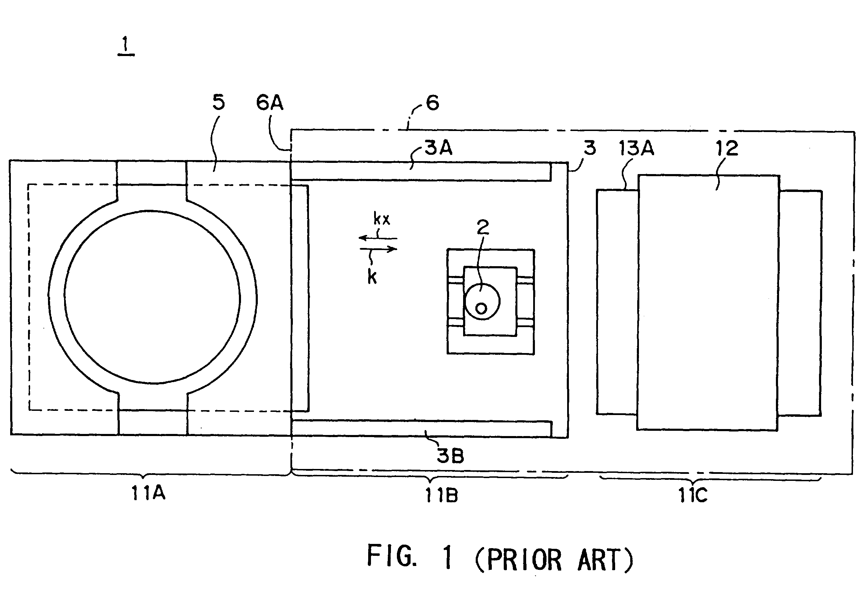

That is, as shown in Fig. 1, in such a disk reproducing apparatus 1, a main tray 5 is held in a manner slidable in the direction indicated by arrow "k" and in the direction opposite thereto indicated by arrow "kx" on sliding portions 3A and 3B of a base 3 on which an optical pickup 2 is mounted. Thus, by sliding the main tray 5 along the sliding portions 3A and 3B, the main tray 5 may be swept from a disk inserting opening 6A provided on a box 6 out to a loading and unloading position 11A and may be drawn to a reproducing position 11B at which the optical pickup is provided.

Further, a plurality of sub-trays 13A are stored in an up and down direction in a stocker 12 which is located at the deepest position as seen from the disk inserting opening 6A; a desired sub-tray is selected from the plurality of sub-trays 13A by moving the stocker in the up and down direction; and the sub-tray 13A to be selected is displaced in the direction indicated by the arrow "kx" to move the desired sub-tray 13A to the reproducing position 11B.

In the mentioned above state, the disk placed on the sub-tray 13A is retained on predetermined turntable (not shown), thereby the disk is driven to be rotated and light beam from the optical pickup is irradiated on the recording surface of the disk to reproduce information recorded on the recording surface of the disk.

Further, when the disk located at the reproducing position 11B is to be ejected to the outside (i.e., the loading and unloading position) from the disk inserting opening 6A, in the state where disk is placed on the sub-tray 13A, the sub-tray 13A is placed on the main tray 5 at the reproducing position 11B, so that the main tray 5 is ejected to the loading and unloading position 11A from the disk inserting opening 6A.

In the above mentioned method, however, since the sub-tray 13A is once placed on the main tray 5 at the reproducing position 11B and then the main tray 5 is moved to the loading and unloading position 11A together with the sub-tray 13A when the sub-tray 13A is to be moved from the stocker 12 to the loading and unloading position 11A. There also are problems that the construction of a disk loading unit of the disk reproducing apparatus 1 becomes complicated and the overall size thereof is increased corresponding to the fact that the main tray 5 is used.

Furthermore, EP-A-0109711 discloses a disc changer player having a housing which is provided with a reproducing unit for reading a recording signal recorded in said discs and a stocker for stacking a plurality of the trays and being movable in the stacking direction of the trays.

### SUMMARY OF THE INVENTION

In view of the foregoing, an object of the present invention is to propose a disk changer player the operability of which is further improved and which may be constructed in a simple structure and may be reduced in size.
This object has been achieved by the features according to claim 1 and furthermore by the features of the subclaims.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a schematic diagram showing a conventional disk reproducing apparatus;
Fig. 2 is a plan view showing an embodiment of a reproducing apparatus according to the present invention;
Fig. 3 is a side view showing the state of accommodating trays;
Fig. 4 is a perspective view showing the construction of the stocker;
Fig. 5 is a schematic plan view showing the driver portion of the stocker;
Fig. 6 is a sectional view showing the driver means of the stocker based on a cam;
Fig. 7 is a schematic plan view showing the state of transporting a tray;
Fig. 8 is a schematic side view showing driver means at the time of transporting a tray;
Fig. 9 is a schematic plan view showing the construction of the reproducing unit;
Fig. 10 is a schematic side view showing the driven state of the reproducing unit based on the side cam;
Fig. 11 is a schematic side view showing the construction of the slide cam;
Fig. 12 is a block diagram showing the control system of the embodiment;
Fig. 13 is a plane view illustrating a construction of a cam;
Figs. 14A to 14C are schematic views illustrating a moving operation of a stocker by cam;
Figs. 15A and 15B are schematic views illustrating a moving operation of a stocker by cam;
Figs. 16A to 16D are schematic diagrams showing storing operation of a disk;
Figs. 17A to 17D are schematic diagrams showing reproducing operation of a disk;
Figs. 18A to 18F are schematic diagrams showing reproducing operation of a disk; and
Figs. 19A to 19E are schematic diagrams for explaining ejecting operation of a disk.

### DETAILED DESCRIPTION OF THE INVENTION

Preferred embodiments of this invention will be described with reference to the accompanying drawings:

### (1) General Construction

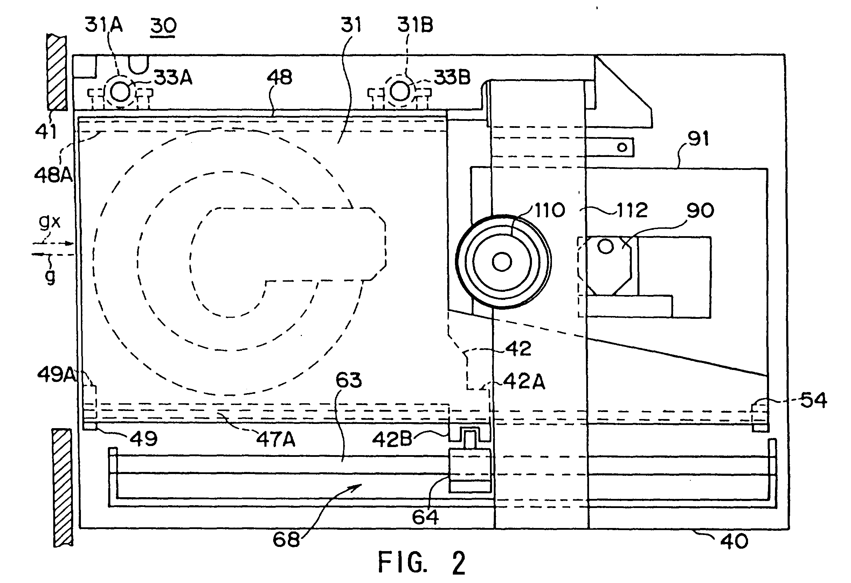

Referring to Fig. 2, numeral 30 generally denotes a disk reproducing apparatus, where slide shafts 33A and 33B are embedded and fixed on a chassis 40 and sliding bearings 31A and 31B provided on the side surface of a stocker 31 are slidably engaged with the slide shafts 33A and 33B.

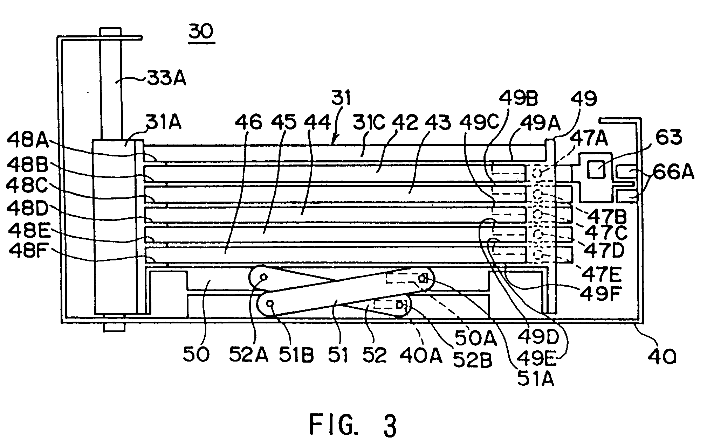

That is, as shown in Fig. 3 as seen from the side of an inserting opening 41, the stocker 31 accommodates a plurality of trays 42, 43, 44, 45 and 46 each capable of mounting a disk thereon. The plurality of trays 42, 43, 44, 45 and 46 are held at their respective one end by guide projections 48B, 48C, 48D, 48E, 48F on a side plate 48. Further, at the other end side of the respective trays 42, 43, 44, 45 and 46, slide shafts 47A, 47B, 47C, 47D and 47E are supported as shown in Fig. 3 by supporting members 49 and 54, and the respective trays 42, 43, 44, 45 and 46 are held on the slide shafts 47A, 47B, 47C, 47D and 47E through sliding bearings 42A, 43A, 44A, 45A and 46A which are fixed on the respective trays 42, 43, 44, 45 and 46. Further, an upper side board 31C is fixed to the stocker 31 on guide projections 48A and 49A.

The stocker 31 accommodating the plurality of trays 42, 43, 44, 45 and 46 in this manner is fixed onto a base 50. A guide hole 50A (Fig. 3) is formed toward the front panel side on the base 50, so that a projecting portion 51A provided at the distal end of an elevator arm 51 may be slid along the guide hole 50A. Further, the elevator arm 51 is supported in a manner capable of pivoting on the chassis 40 at a rotating shaft 51B.

Further, an elevator arm 52 is constructed so that a projection portion 52B provided at one terminal end thereof may be slid along a guide hole 41A formed on the chassis 40 and it is supported in a manner of pivot on the base 50 of the stocker 31 at a rotating shaft 52A.

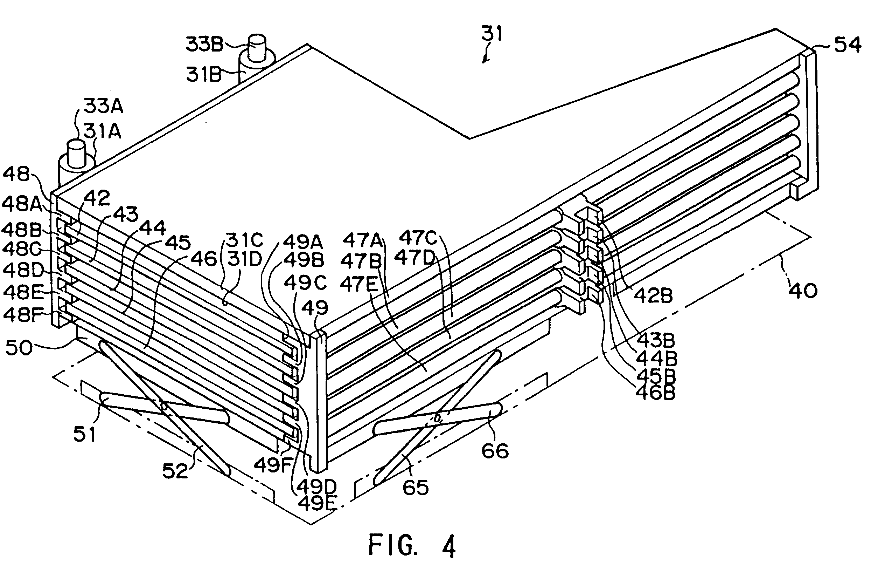

As shown in Fig. 4, elevator arms 65 and 66 are provided in a similar manner at the side surface side of the stocker 31, so that, when the stocker is thereby moved in the up and down directions (the directions of arrows "a" and "ax") the stocker 31 is supported by the elevator arms 51 and 52.

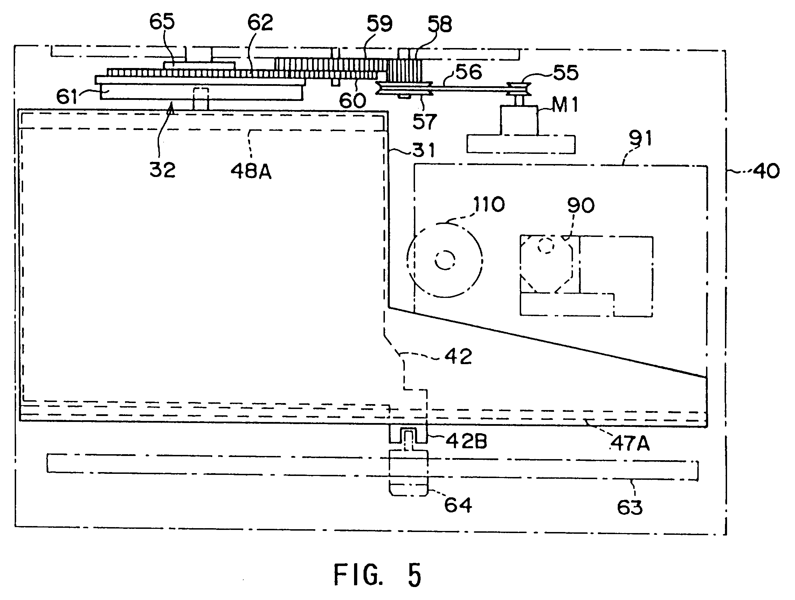

Here, a stocker displacing unit 32 is provided as shown in Fig. 5 as driver means for moving the stocker 31 holding the trays 42, 43, 44, 45 and 46 up and down directions (the directions of arrows "a" and "ax") along the slide shaft 33A and 33B; in this driver means a pulley 55 is fixed to the output shaft of a motor M1 which is fixed to a part of the chassis 40; and the rotation of the pulley 55 is transmitted to a second pulley 57 through a belt 56.

A toothed wheel 58 is formed on the pulley 57 and the rotating force is transmitted to a toothed wheel 62 provided on a cam 61 through a toothed wheel 59 meshed with the toothed wheel 58 and a toothed wheel 60 integrally formed with the toothed wheel 59. Thus the rotating force of the motor M1 is transmitted to the cam 61 and the cam 61 may be rotated by driving the motor M1 to rotate.

A rotary encoder 65 is provided at the rotating center of the cam 61 so that the rotating position of the rotary encoder 65 (i.e., rotating position of cam 61) may be detected.

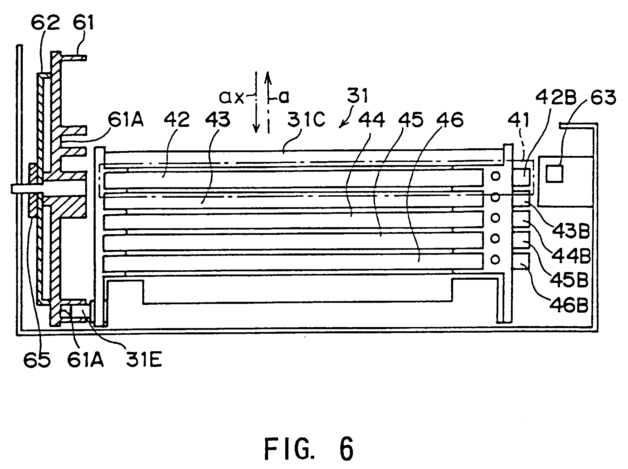

Further, a slide groove 61A is formed as shown in Fig. 6 and Figs. 12 to 14 mentioned later on the side surface of the cam 61 and the cam 61 and the cam 61 rotates to cause a guide projection 31E fixed on the stocker 31 to slide along the slide groove 61A. Thereby the stocker 31 may be moved up and down directions in the direction indicated by arrow "a" or in the direction opposite thereto indicated by arrow "ax". Thus, the stocker 31 is moved up and down directions and the cam 61 is stopped at a predetermined rotating position on the basis of an output signal of the rotary encoder 65 which is designed to detect the rotating position of the cam 61, thereby a desired tray of the trays 42 to 46 which are stored in the stocker 31 may be moved to a predetermined sweeping out and inserting position facing the disk inserting opening 41.

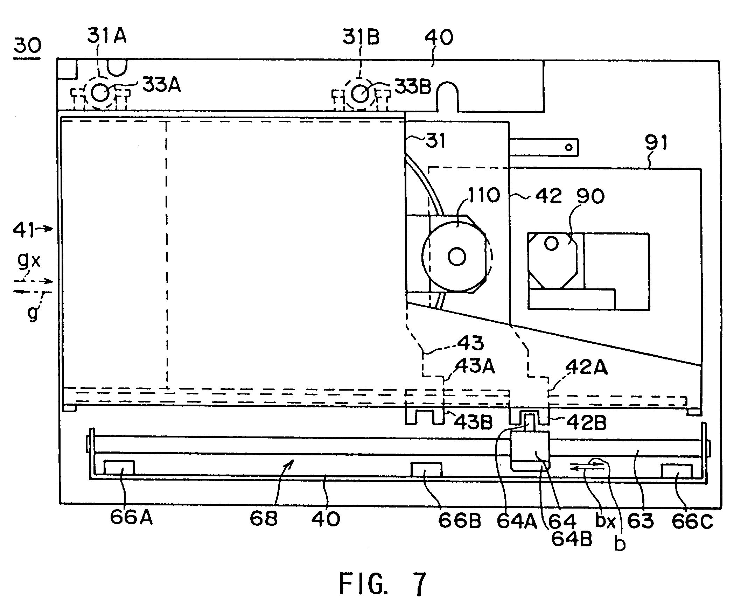

Further, recessed engaging portions 42B, 43B, 44B, 45B and 46B are formed respectively on the terminal end portions of the sliding bearings 42A, 43A, 44A, 45A and 46A of the trays 42 to 46 which are stored in the stocker 31; of the engaging portions 42B, 43B, 44B, 45B and 46B, the engaging portion of the tray which is located at an upward position P of the inserting opening 41 (hereinafter referred to as transportable position) is constructed to engage with an engaging projection 64A of a sliding bearing 64 which is slid along a slide shaft 63 in the direction of arrow "b" on a tray moving unit 68 of Fig. 7 so that it may be slid in the direction of arrow "b" (or the direction opposite thereto of arrow "bx") in accordance with the movement of the sliding bearing 64. Thus, the desired tray displaced to the transportable position P may be transported along the respective slide shafts 47A, 47B, 47C, 47D and 47E by the tray moving unit 68.

Further, the position of the sliding bearing 64 may be detected by position detecting elements 66A, 66B, 66C formed for example of photo sensors fixed on the chassis 40.

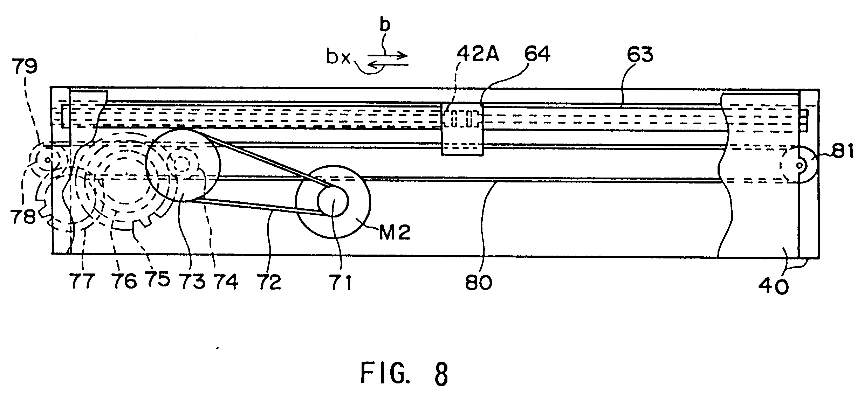

Here, a pulley 71 is fixed as shown in Fig. 8 on the output shaft of a motor M2 fixed on a part of the chassis 40 as means for displacing the sliding bearing 64 along the slide shaft 63, so that the rotation of the pulley 71 is constructed to be transmitted to a second pulley 73 through a belt 72.

Further, a toothed wheel 74 is formed on the second pulley 73; a toothed wheel 75 is meshed with the toothed wheel 74; a toothed wheel 77 is meshed with a toothed wheel 76 which is integrally formed with the toothed wheel 75. A toothed wheel 78 integrally formed with a belt driving toothed wheel 79 is meshed with the toothed wheel 77.

Thus, the belt driving toothed wheel 79 may be rotated by driving the motor M2 to rotate, thereby a toothed belt 80 meshed respectively with belt driving toothed wheels 79 and 81 may be rotated. At this time, the sliding bearing 64 fixed on a portion of the toothed belt 80 may be moved along the slide shaft 63.

Thus, at this time, the tray 42 fixed integrally with the engaging portion 42A which is engaged with the sliding bearing 64 may be transported in the direction along the slide shaft 63 (i.e., in the direction indicated by the arrow "b" or the opposite direction thereof indicated by the arrow "bx".

Here, the tray moving unit 68 transports the trays 42 to 46 by sliding bearing 64 engaged the sliding shaft 63, thereby the length of the sliding shaft 63 can be made shorter than the transporting regions of the trays 42 to 46.

That is, the transporting regions of the trays 42 to 46 are from a loading and unloading position of the disk DISK derived from the disk insert opening 41 of the disk reproducing apparatus 30 to the outer direction (i.e. the direction indicated by the arrow "g" in Fig. 2) to the reproducing position facing to a base 91 mounting an optical pickup 90. To this, the length of the sliding shaft 63 is from the positions at which the trays 42 to 46 are stored in the stocker to the reproducing position mentioned above.

Therefore the length of the sliding shaft 63 can be made shorter than the transporting length of the trays 42 to 46 so as to be able to use the whole region for setting up the tray moving unit 68 as the transporting regions of the trays 42 to 46. As a result, the transporting distance of the trays 42 to 46 can be made longer in the region to be limited.

The sliding shaft 63 is also a polygon in cross section to the sliding direction, and the sliding surface of the sliding bearing 64 facing to the sliding shaft 63 is formed as a polygon bearing corresponding to the shape of the sliding shaft, so that it can be avoided from the fact that the sliding bearing 64 rotates about the center of the sliding shaft 63.

With this arrangement, the trays 42 to 46 are transported by means of the sliding bearing 64 sliding along the sliding shaft shaped into a polygon in cross section as a result the transporting distance can be made longer without fixing means in rotating and with simple construction. Therefore the disk reproducing apparatus mounting the tray moving unit 68 can be reduced in size.

In the embodiment mentioned above, there is used the sliding shaft 63 being a polygon in cross section. The present invention is not only limited but also it is applicable to sliding shafts being various polygons in cross section.

Next, as a method for selecting a tray to be moved by the sliding bearing 64 from the plurality of trays 42, 43, 44, 45 and 46 which are stored in the stocker 31, the stocker 31 is moved up and down by means of the construction described above with respect to Fig. 6. Thereby the selected tray may be moved to the upward position P which is the same as that of the slide shaft 64 by up and down motions of the stocker 31, to cause one of the engaging portions 42B to 46B of the trays to engage with the projection portion 64A of the sliding bearing 64. The upward position P is determined so that the upward position of the tray of which the engaging portion is engaged with the sliding bearing 64 is equalized with the upward position of the inserting opening 41.

Thus, the selected tray is ejected in the direction indicated by the arrow "g" by driving the motor M2 and it is drawn into the direction indicated by the arrow "gx" by reversing the motor M2 (in Fig. 7).

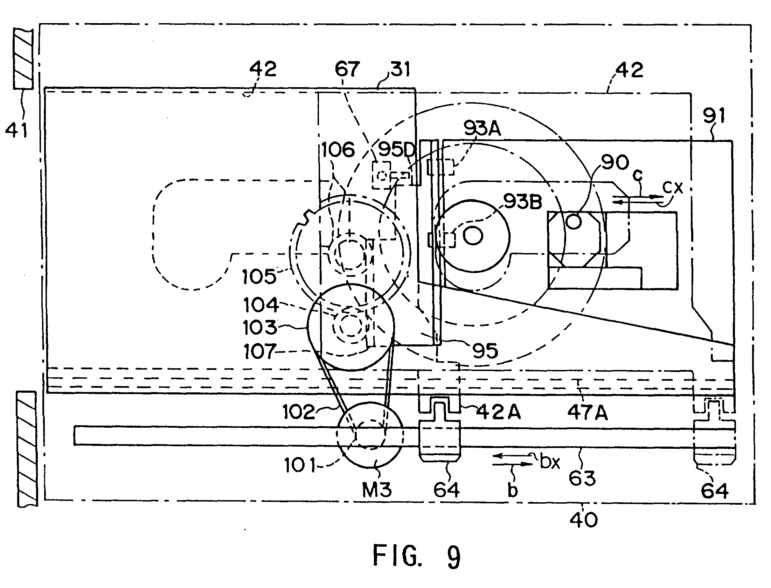

Further, as shown in Fig. 9, an optical pickup 90 is provided at the position to which one of the trays 42 to 46 may be drawn deepest as seen from the inserting opening 41. The optical pickup 90 is capable of moving on the base 91 in the direction indicated by the arrow "c" or in the direction indicated by the arrow "cx", so that the irradiating position of light beam irradiated on the disk mounted on the tray is moved along the recording track of the disk.

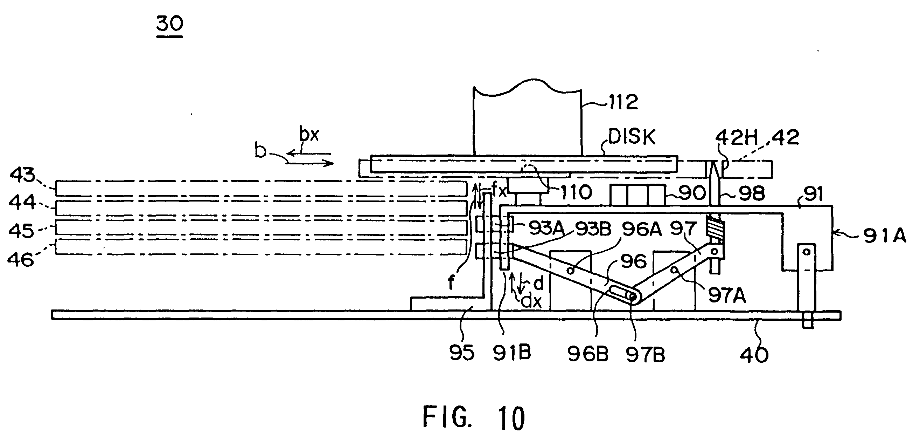

Here, as shown in Fig. 10, the base 91 is fixed at a fixed end 91A thereof to the chassis 40 of the disk reproducing apparatus 30 and is capable of being displaced at an displacing end 91B thereof opposite to the fixed end 91A in the direction indicated by the arrow "d" and in the direction indicated by the arrow "dx".

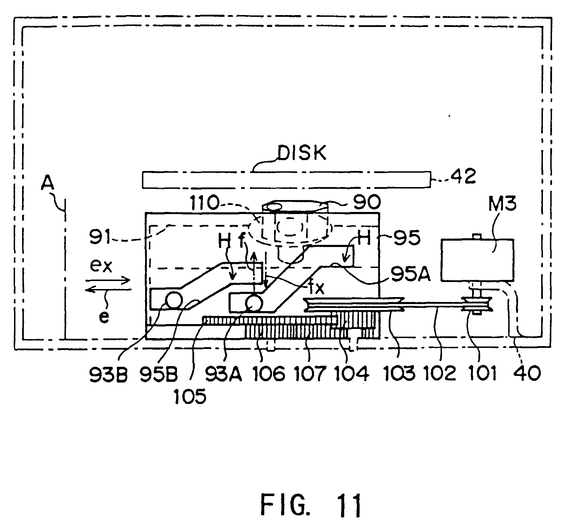

Specifically, an engaging shaft 93A is fixed to the displacing end 91B of the base 91 such that, as shown in Fig. 11, the engaging shaft 93A is engaged with a guide hole 95A which is formed in an oblique direction and in the horizontal direction on the vertical surface of the slide cam 95.

Here, the slide cam 95 is adapted to be capable of being slid in the direction indicated by the arrow "e" or in the direction indicated by the arrow "ex" and motor M3 is provided as driver means for driving the slide cam 95 to slide. Specifically, a pulley 103 is engaged through a belt 102 with a pulley 101 which is fixed on the output shaft of the motor M3 and a toothed wheel 105 is meshed with a toothed wheel 104 which is integrally formed with the pulley 103. Further, a toothed wheel 106 formed integrally with the toothed wheel 105 is meshed with a rack 107 which is formed on the slide cam 95.

Thus, the slide cam 95 may be slid in the direction indicated by the arrow "e" or in the direction indicated by the arrow "ex" by driving the motor M3 to rotate.

By sliding the slide cam in the direction indicated by the arrow "e", the engaging shaft 93A of the base 91 is also moved in the direction indicated by arrow "f" along the guide hole 95A. Thus, the displacing end 91B (Fig. 10) of the base 91 to which the engaging shaft 93A is fixed is also moved corresponding to the movement of the engaging shaft 93A in the direction indicated by the arrow "f". In this manner, when the slide cam 95 is slid to an end portion A of the sliding region, the engaging shaft 93A reaches the horizontal region H of the guide hole 95A, thereby the displacing end 91B of the base 91 is moved to the uppermost portion so as to bring the base 91 into a substantially horizontal state. At this time, the position of the slide cam 95 is detected as a position detecting element formed of a microswitch 67 (Fig. 9) is pressed by a projecting portion provided on a part of the slide cam 95, to thereby stop the motor M3.

Here, an engaging shaft 93B fixed on a terminal end of a rotating arm 96 (Fig. 10) is engaged with a guide hole 95B of the slide cam 95 so that it is moved up and down along the arrow "f" or in the direction indicated by the arrow "fx" in accordance with the sliding operation of the slide cam 95. Thus, the rotating arm 96 as shown in Fig. 9 is rotated about the rotating center 96A in accordance with the up and down movement of the engaging shaft 93B. Further, a guide hole 96B is formed at a terminal end on the side opposite to the terminal end on which the engaging shaft 93B of the rotating arm 96 is provided, and an engaging projection 97B provided on a terminal end of a rotating arm 97 is engaged with the guide hole 96B so that it may be slid along the guide hole 96B.

Thus the rotating arm 97 may be rotated about the rotating center 97A in accordance with the rotating operation of the rotating arm 96 so that a pin 98 engaged with a terminal end portion of the rotating arm 97 is moved up and down in accordance with the rotating operation of the rotating arm 97.

Thus, referring to Fig. 10, in accordance with the displacing operation of the base 91 in the direction of the arrow "f", the pin 98 is inserted into a positioning hole 42H of the tray 42 which is selected from the plurality of trays 42 to 46 and is moved to the reproducing position on the optical pickup 90, thereby positioning of the tray 42 may be performed and it is possible to prevent an inadvertent movement of the tray 42 in the direction indicated by the arrow "b" or in the direction indicated by the arrow "bx".

In above mentioned state, therefore, a turntable 110 provided on the base 91 presses the disk DISK mounted on the tray 42 toward a disk holder 112 (Fig. 10), thereby the disk DISK may be driven to be rotated by rotating the turntable 110. Further, at this time, light beam may be irradiated from the light pickup of the base 91 onto the recording surface of the disk DISK mounted on the tray 42 to read the information from the rotating disk DISK.

Further, upon completion of reproducing operation, the slide cam 95 is slid to the direction indicated by the arrow "ex" (Fig. 11) to move the displacing end 91B of the base 91 to the direction of the arrow "fx" (i.e., the downward direction). In this manner, the displacing end 91B of the base 91 is displaced to the lowermost portion by sliding the slide cam 95 to the end portion of the sliding region. Thus, in this state, as the turntable 110 of the base 91 is simultaneously displaced to the lowermost portion, the disk DISK mounted on the tray 42 is brought into its opened state and the pin 98 (Fig. 9) is pulled out from the positioning hole 42H of the sub-tray 42. In this state the tray 42 is moved to the position of the stocker 31.

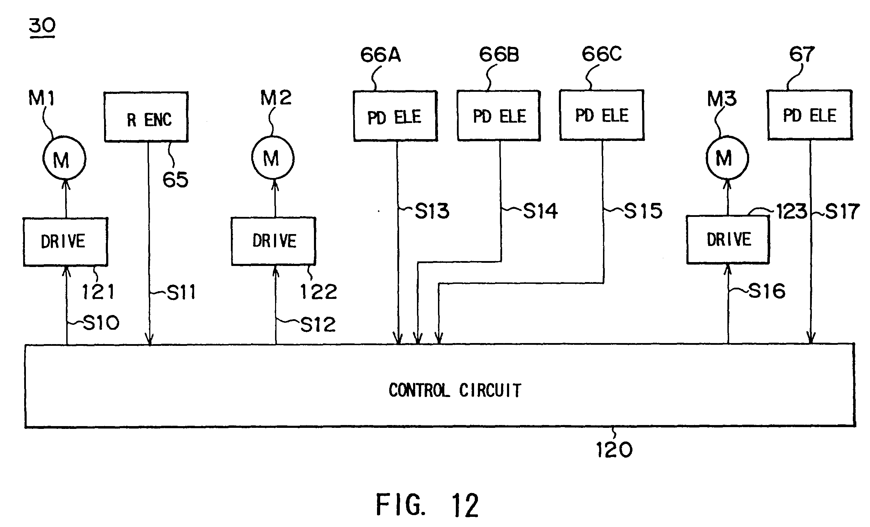

Here, as shown in Fig. 12, the disk reproducing apparatus 30 is provided with a control circuit 120 and a drive circuit 121 for moving up and down the stocker 31 is controlled on the basis of control signal S10 from the control circuit 120.

Further, the position of the stocker 31 at the time of moving the stocker 31 to up and down directions (the directions of arrows "a" and "ax") is input to the control circuit 120 by a position detection signal S11 from the rotary encoder 65, so that the position of the stocker 31 may be detected at the control circuit 120.

Further, the control circuit 120 delivers a control signal S12 to a drive circuit 122 to drive the respective tray 42, 43, 44, 45 or 46 along the sliding bearing 63.

Further the sliding position of each tray 42, 43, 44, 45 or 46 at the time of driving each tray 42, 43, 44, 45 or 46 along the sliding bearing 63 may be detected at the control circuit 120 as position detection signals S13, S14 and S15 from the position detecting elements 66A, 66B and 66C provided along the sliding bearing 63 are input to the control circuit 120.

Further, the control circuit 120 is to move up and down the displacing end 91B of the base 91 on which the optical pickup 90 is mounted by delivering a control signal S16 to a drive circuit 123.

Further, the position of the displacing end 91B at the time when moving up and down the displacing end 91B of the base 91 on which the optical pickup 90 is mounted is detected as a position detection signal S17 provided from the position detecting element 67 adapted to detect the position of the slide cam 95 is input to the control circuit 120, whereby the control circuit 120 controls the drive of the drive circuit 123 on the basis of the detected result.

### (2) Movement of Stocker by Cam

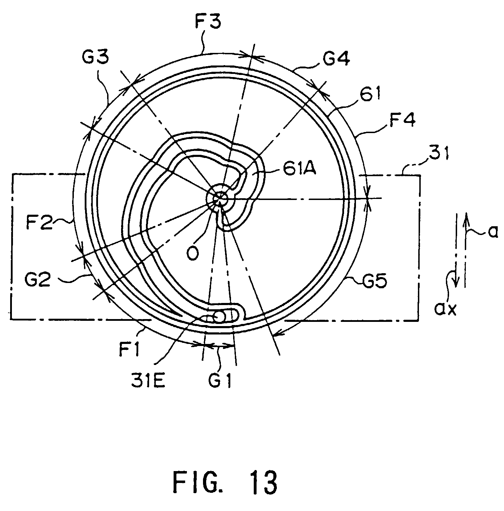

Next, a description will be given with respect to a movement of the stocker 31 by the cam 61. Fig. 13 illustrates construction of the cam 61 according to the present invention. A guide projection 31E fixed to a stocker 31 is inserted into a sliding groove 61A formed on the side surface of the cam 61 and is slid by the sliding groove 61A, when a rotary driving force of the motor M1 is transmitted to the cam 61, so that the cam 61 is rotated. As a result the stocker 31 moves up or down to a direction indicated by the arrow "a" or the direction indicated by the arrow "ax".

Here, the sliding groove 61A of the cam 61 sequentially forms sliding areas G1, F1, G2, F2, G3, F3, G4, F4 and G5 which have different radius curvatures from outermost circumference to a rotary center O.

The sliding areas G1, G2, G3, G4 and G5 are respectively formed along circular arcs the centers of which are identical with the rotary center O of the cam 61. When the guide projection 31E of the stocker 31 slides along the sliding areas G1, G2, G3, G4 and G5, it becomes in a state that the guide projection 31E does not move to the direction of the arrow "a" and the direction of the arrow "ax". Accordingly, while the guide projection 31E slides in the sliding areas G1, G2, G3, G4 and G5, the stocker 31 keeps in a state of no movement.

On the other hand, sliding areas F1, F2, F3 and F4 are respectively formed along different circular arcs the centers of which are not identical with the center O of the cam 61. When the guide projection 31E slides in the sliding areas F1, F2, F3 and F4, it becomes in a state that the guide projection 31E is moved to the direction indicated by the arrow "a" or the direction indicated by the arrow "ax". Therefore while the guide projection 31E slides in the sliding areas F1, F2, F3 and F4, the stocker 31 is moved to the direction indicated by the arrow "a" or the direction indicated by the arrow "ax" corresponding to the movement of the stocker 31.

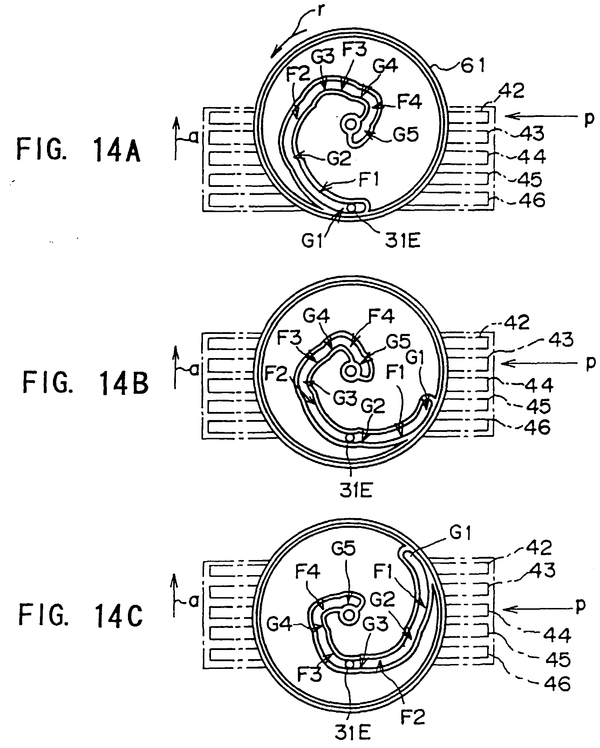

Accordingly, as shown in Fig. 14A, when the guide projection 31E of the stocker 31 is in the sliding area G1, the stocker 31 is positioned at the lowest. Then, a position of a tray 42 becomes a transmittable position P as high as a disk insert opening 41.

In this state, the guide projection 31E moves to the direction indicated by the arrow "a", while the cam 61 rotates to a direction indicated by an arrow "r" so that the guide projection 31E is slid in sliding area F1 of the sliding groove 61A.. Hence, the stocker 31 is similarly moved to the direction of the arrow "a" corresponding to that. After that, when the guide projection 31E is moved in sliding area G2, the stocker 31 gets to the height of the transmittable position P where the tray 43 can be transmitted as shown Fig. 14B.

Further in this state, the guide projection 31E moves to the direction indicated by the arrow "a", while the cam 61 rotates to the direction indicated by the arrow "r" so that the guide projection 31E slides in the sliding area F2 of the sliding groove 61A. Accordingly, the stocker 31 is similarly moved to the direction of the arrow "a" corresponding to that. Thereafter, the guide projection 31E gets to the sliding area G3, and then the stocker 31 gets to the height of the transmittable position P where the tray 44 can be transmitted as shown Fig. 14C.

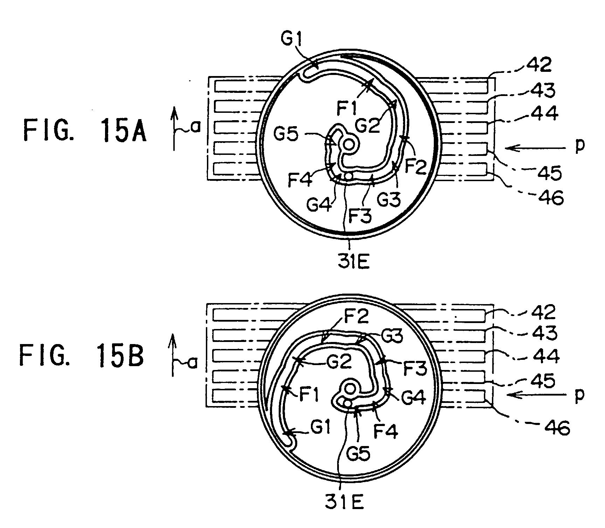

Further in this state, the guide projection 31E moves to the direction indicated by the arrow "a", while the cam 61 rotates to the direction of the arrow "r" so that the guide projection 31E slides in the sliding area F3. Accordingly, the stocker 31 is similarly moved corresponding to that. After that, when the guide projection 31E gets to the sliding area G4, and then the stocker 31 gets to the height of the transmittable position P where the tray 45 can be transmitted as shown Fig. 15A.

Further in this state, the guide projection 31E moves to the direction of the arrow "a", while the cam 61 rotates to the direction indicated by the arrow "r" so that the guide projection 31E slides in the sliding area F4 of the sliding groove 61A. Hence, the stocker 31 is similarly moved to the direction indicated by the arrow "a" corresponding to that. After that, when the guide projection 31E gets to the sliding area G5, and then the stocker 31 gets to the height of the transmittable position P where the tray 46 can be transmitted as shown Fig. 15B.

In the above construction, a control circuit 120 (Fig. 12) is inputted a command with which a desired tray (42 to 46) is transmitted to an insert/carry-out position of a disk DISK or a reproducing position, when user executes a predetermined operation. Thus, corresponding to that the control circuit 120 is outputted driving signal S10 to a drive circuit 121, so that said selected tray is moved to transmittable position P.

Corresponding to this, the drive circuit 121 drives a motor M1 to rotate it to predetermined direction so as to rotate the cam 61. Here, the control circuit 120 detects a rotating position of the cam 61 via a rotary encoder 65 to stop the rotation of the cam 61, when the guide projection 31E gets to the sliding areas G1, G2, G3, G4 and G5 of the cam 61 where a selected tray (42 to 46) gets to the transmittable position P.

Here, the sliding areas G1, G2, G3, G4 and G5 of the cam 61 are respectively formed at predetermined zones where correspond to the transmittable positions P of the trays 42 to 46. When the guide projection is in the thus zones, the tray corresponding to the sliding area G1, G2, G3, G4 or G5 is maintained at the transmittable position P. Thereby, a driving error of means for driving the cam 61 can be reduced, by having formed area of the sliding areas G1, G2, G3, G4 and G5.

With the above construction, the stocker 31 is moved to the direction indicated by the arrow "a" or the direction indicated by the arrow "ax", by the cam 61 for rotating, thus it is possible to minimize the structure with simple construction, for example as compared with where using slide cams, because a sliding area becomes unnecessary.

### (3) Operation of the Embodiment

In operating of this disk reproducing apparatus 30, the trays 42, 43, 44, 45 and 46 are to be moved along the height P which corresponds to the disk inserting opening 41. This position is the position at which the sliding bearing 64 is retained.

First, when no disk is stored within the disk reproducing apparatus 30, the disk DISK is placed on any of the trays 42 to 46 so as to execute the operation for storing it within the disk reproducing apparatus 30.

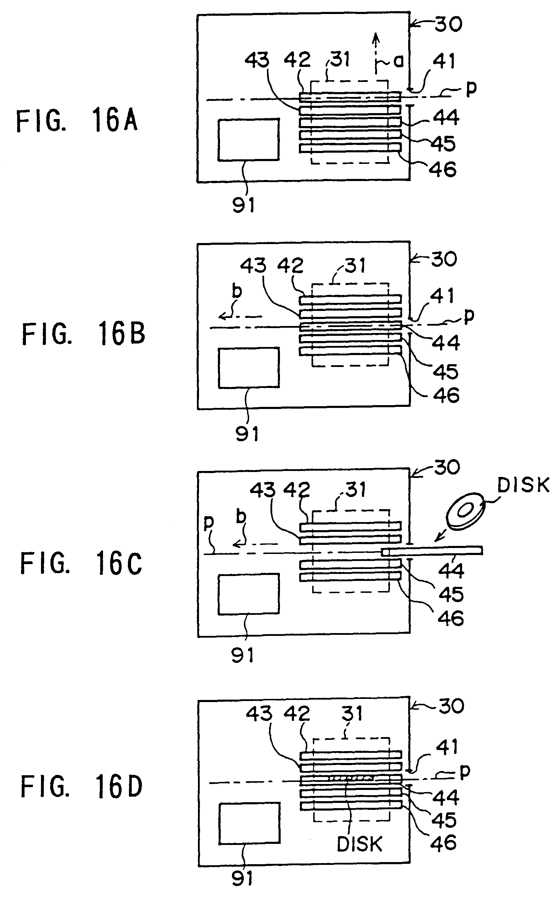

Specifically, when for example the disk is placed on the tray 44 and is to be stored within the disk reproducing apparatus 30 (Fig. 16A), the control circuit 120 (Fig. 12) drives the motor M1 through the drive circuit 121 in response to the necessary operation so as to move the stocker 31 in the direction indicated by the arrow "a" by rotating the cam 61 (Figs. 5 and 6). Then, the fact that the tray 44 has reached the transportable position P is detected by the position detection signal S11 from the rotary encoder 65 (Fig. 12), and at this time the control circuit 120 stops the movement of the stocker 31. At this time, the engaging portion 44B fixed to the tray 44 and the engaging projection 64A provided on the sliding bearing 64 are engaged with each other (Fig. 16B).

In this state, the control circuit 120 drives the motor M2 through the drive circuit 122 so as to move the sliding bearing 64 (Fig. 7) in the direction indicated by the arrow "bx". Then, when the position detecting element 66A has detected the arrival of the sliding bearing 64, the control circuit 120 stops the movement of the sliding bearing 64. In this state, the tray 44 is in the state (Fig. 16C) where it is ejected to the outside of the disk reproducing apparatus 30 (this position being referred to as loading and unloading position of disk) from the disk inserting opening 41, whereby the disk DISK may be placed on the tray 44.

Further, when the operator places the disk DISK on the tray 44 and performs the required operation, the control circuit 120 responds to this by driving the motor M2 through the drive circuit 122 to move the sliding bearing 64 in the direction indicated by the arrow "b". Then, upon detection of the arrival of the sliding bearing 64 by the position detecting element 66B, the control circuit 120 causes the traveling of the sliding bearing 120 to stop. In this state, the tray 44 having the disk DISK placed thereon has been stored to the stocker 31 (Fig. 16D). By an operation similar to the above, disks DISK may be placed on any trays 42 to 46.

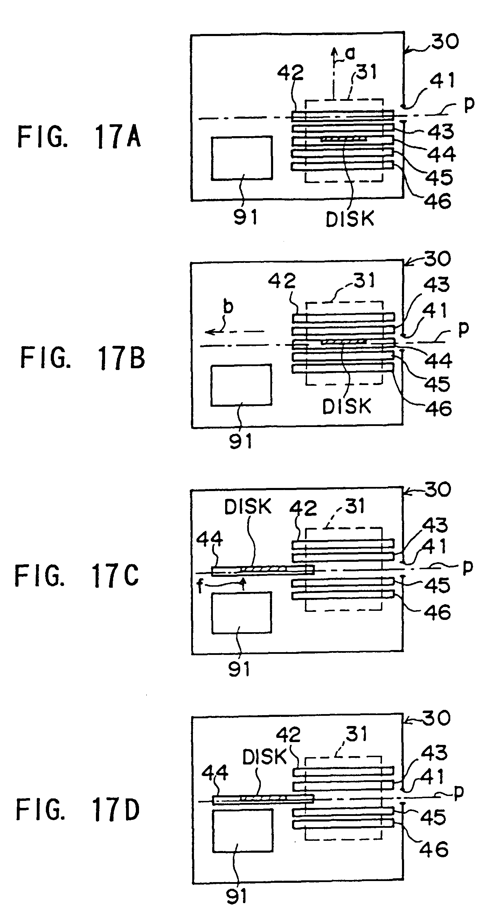

The operation for reproducing the disk DISK placed on one of the trays 42 to 46 will now be described. For example, as shown in Fig. 17, in the case where the disk DISK placed on the tray 44 is to be reproduced (Fig. 17A), the control circuit 120, in response to the required operations, rotates the cam 61 by driving the motor M1 through the drive circuit 121, so as to move the stocker 31 in the direction of the arrow "a" (Fig. 6). Then, the fact that the tray 44 has reached the transportable position P is detected by the position detection signal S11 from the rotary encoder 65, and at this time the control circuit 120 stops the traveling of the stocker 31.

At this time, the engaging portion 44B provided on the tray 44 and the engaging projection 64A of the sliding bearing 64 are engaged with each other (Fig. 17B). After the stocker 31 is stopped at a predetermined position, the control circuit 120 drives the motor M2 through the drive circuit 122 to move the sliding bearing 64 (Fig. 7) in the direction indicated by the arrow "b". Then, upon detection of arrival of the sliding bearing 64 by the position detecting element 66C (Fig. 7), the traveling of the sliding bearing 64 is stopped (Fig. 17C).

After stopping of the sliding bearing 64 at the predetermined position, the control circuit 120 moves the slide cam 95 (Fig. 10) by driving the motor M3 through the drive circuit 123 to move the base 91 having the optical pickup mounted thereon in the direction indicated by the arrow "f". Then, upon detection by the position detecting element 67 of the fact that the base 91 has come to the reproducing position, the slide cam 95 is caused to stop. In this state, the disk DISK placed on the tray 44 may be played (Fig. 17D). By an operation similar to the above, the disk DISK on a selected one of the disk trays 42 to 46 may be played.

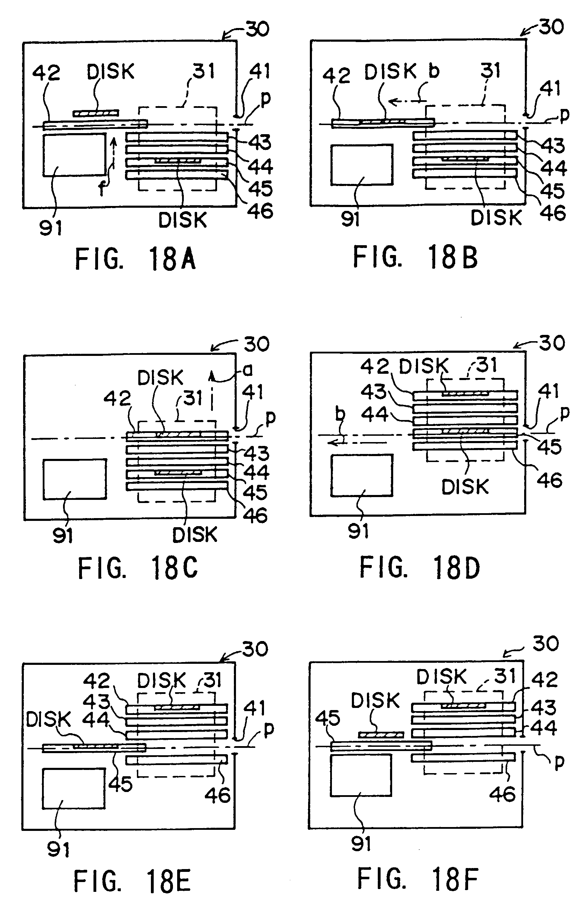

Next, a description will now be given with respect to the operation for continuously playing a disk DISK placed on a tray different from the disk DISK placed on the selected one of the trays 42 to 46 which is currently located at the reproducing position. That is, in the case as shown in Figs. 18A to 18F where for example, when the disk DISK placed on the tray 42 is being played (Fig. 18A), playing of a disk DISK placed on another tray 45 instead of the one placed on the tray 42 is desired, the control circuit 120, in response to the required operations, moves the slide cam 95 by driving the motor M3 through the drive circuit 123 so as to move the base 91 having the optical pickup mounted thereon in the direction indicated by the arrow "fx". Then, upon detection by the position detecting element 67 of the fact that the base 91 has come to the position for canceling the reproduction, the slide cam 95 is caused to stop (Fig. 18B).

After stopping of the slide cam 95, the control circuit 120 drives the motor M2 through the drive circuit 122 to move the sliding bearing 64 in the direction indicated by the arrow "bx". Then, upon detection at the position detecting element 66B (Fig. 7) of the fact that the sliding bearing 64 has arrived, the traveling of the sliding bearing 64 is stopped (Fig. 18C). After the sliding bearing 64 is stopped at the predetermined position, the control circuit 120 drives the cam 61 (Fig. 5) to be rotated by driving the motor M1 through the drive circuit 121, so as to move the stocker 31 in the direction indicated by the arrow "a".

Then, the traveling of the sliding bearing 64 is stopped when the tray 45 has reached the transportable position P by the position detection signal S11 from the rotary encoder 65. At this time, the engaging portion 42B provided on the tray 45 and the engaging projection 64A of the sliding bearing 64 are engaged with each other (Fig. 18D). After the stocker 31 has stopped at the predetermined position, the control circuit 120 drives the motor M2 through the drive circuit 122 to move the sliding bearing 64 in the direction indicated by the arrow "b" (Fig. 18E). Then, upon detection by the position detecting element 66C of the fact that the sliding bearing 64 has arrived, the drive circuit 123 to move the slide cam 95 (Fig. 9), so as to stop the traveling of the slide cam 95 upon detection of the fact that the base 91 has reached the reproducing position. In this state, the disk DISK placed on the tray 45 may be played (Fig. 18F).

By an operation similar to the above, while the disk DISK placed on any of the trays 42 to 46 is being played, a disk placed on another tray may be continuously exchangeably played with predetermined manipulation.

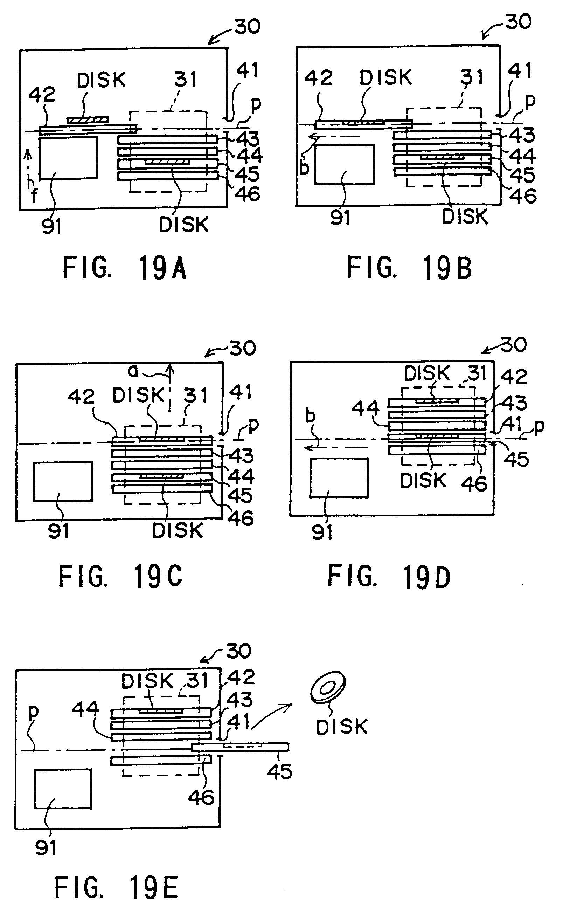

Next, a description will be given with respect to an operation in which, during playing of the disk placed on any of the trays, a disk DISK placed on another tray is taken out in response to the predetermined manipulation. That is, as shown in Figs. 19A to 19D, when for example the disk DISK placed on the tray 45 is to be taken out while the DISK placed on the tray 42 is being played (Fig. 19A), the control circuit 120, in response to the required manipulations, moves the slide cam 95 (Fig. 6) by driving the motor M3 through the drive circuit 123 so as to move the base 91 in the direction indicated by the arrow "fx". Then, upon detecting the fact that the base 91 has come to the reproduction canceling position on the basis of the position detection signal S17 of from the position detecting element 67, the control circuit 120 stops the traveling of the slide cam 95 (Fig. 19B).

After the slide cam 95 has stopped, the control circuit 120 drives the motor M2 through the drive circuit 122 to move the sliding bearing 64 in the direction indicated by the arrow "bx". Then, upon detecting at the position detecting element 66B that the sliding bearing 64 has arrived, the traveling of the sliding bearing 64 is stopped (Fig. 19C). After the sliding bearing 64 is stopped at the predetermined position, the control circuit 120 drives the cam 61 (Fig. 5) to be rotated by driving the motor M1 through the drive circuit 121, so as to move the stocker 31 in the direction indicated by the arrow "a". Then, the traveling of the stocker 31 is stopped when the tray 45 has come to the transportable position P by the position detection signal S11 from the rotary encoder 65. At this time the engaging portion 45B provided on the tray 45 and the engaging projection 64A of the sliding bearing 64 are engaged with each other (Fig. 19D).

After the stocker 31 has stopped at the predetermined position, the control circuit 120 drives the motor M2 through the drive circuit 122 to move the sliding bearing 64 in the direction indicated by the arrow "bx". Then, upon detection at the position detecting element 66A (Fig. 7) of the fact that the sliding bearing 64 has arrived, the traveling of the sliding bearing 64 is stopped. In this state, the disk DISK placed on the tray 45 may be taken out (Fig. 19E).

By an operation similar to the above, during playing of the disk DISK placed on any of the trays 42 to 46, a disk DISK placed on another tray may be taken out.

As described, in the disk reproducing apparatus 30, by a simple operation method of inserting the disk DISK from the disk inserting opening 41 by way of the tray 42, 43, 44, 45 or 46, the disk may be stored to the stocker 31 and it is possible to play a desired disk of the disks DISK stored within the stocker 31.

Further, in the case of taking out a disk DISK, a desired disk DISK of the plurality of the disks DISK stored in the stocker 31 may be ejected to the outside from the disk inserting opening 41.

Further, a desired disk DISK of the plurality of disks DISK stored in the stocker 31 may be moved to the reproducing position.

Further, in the disk reproducing apparatus 30, a loading and unloading unit and a reproducing unit of the disk DISK are provided in front and at the rear of the stocker 31 and the trays stored in the stocker 31 may be slid in the front and rear direction of the stocker 31, thereby the traveling distance of the trays 42 to 46 from the stocker 31 may be shorter in comparison with the conventional case where the reproducing unit is provided between the loading/unloading unit and the stocker 31.

Thus the trays 42 to 46 may be moved directly to the loading/unloading position of the disk located at the outside of the disk reproducing apparatus 30 without using a main tray as in the conventional case, thereby the construction of the disk reproducing apparatus 30 may be correspondingly simplified and the disk reproducing apparatus 30 as a whole may be made smaller in size.

### (4) Advantage of the Embodiment

According to the above construction, by a further simplified operating method, the disk DISK may be stored into the disk reproducing apparatus 30 and it is possible to select a desired disk from the disks DISK stored in the stocker 31 for reproduction.

Further, the trays 42 to 46 may be moved directly to the outside (loading and unloading position) of the disk reproducing apparatus 30 from the disk inserting opening 41, thereby the construction of the disk reproducing apparatus 30 may be correspondingly simplified and the disk reproducing apparatus 30 as a whole may be made smaller in size.

### (5) Other Embodiments

It should be noted that, while in the above described embodiment a description has been given with respect to a case where the stocker 31 having five trays 42 to 46 as the trays for storing the disks DISK is used, the number of trays is not limited to this and it requires only that the disk reproducing apparatus is of the type storing a plurality of disks DISK by means of a plurality of trays and reproducing selectively.

Further, while in the above described embodiment a description has been given with respect to a case where the type in which the recorded information is to be optically read is used as the disk to be reproduced, the present invention is not limited this and may be suitably applied to reproducing apparatus for reproducing various other recording mediums.

### Effect of the Invention

As has been described, according to the present invention, a stocker for accommodating in parallel a plurality of trays for respectively holding recording mediums is moved by a predetermined displacing means in the direction along which the trays are provided in parallel to selectively move a desired holding means to a transportable position, so as to transport the moved tray to the outside of the reproducing apparatus and so as to transport the tray in a similar manner to the reproducing position, thereby the plurality of recording mediums may be stored and selectively reproduced by a more simplified operating method.

Further, a loading/unloading unit and a reproducing unit of the recording medium are positioned in front and at the rear of the accommodation means, thereby the holding means may be moved directly to the loading/unloading position or to the reproducing position without using another holding means whereby the reproducing apparatus may be correspondingly reduced in size.

While there has been described in connection with the preferred embodiments of the invention, it will be obvious to those skilled in the art that various changes and modifications may be made therein without departing from the invention, and it is aimed, therefore, to cover in the appended claims all such changes and modifications as fall within the scope of the invention.

## Claims

1. A disk changer player (30) having a housing which is provided with an opening (41) through which trays on which respective disks may be placed can be extended and retracted, said disk changer player (30) comprising in said housing:
a reproducing unit (90, 91) for reading a recording signal recorded in said disks;
a stocker (31) for stacking a plurality of the trays (42-46) and being arranged between said opening (41) and said reproducing unit (90, 91);
first moving means (32) for moving said stocker (31) along the stacking direction (a, ax) of said stocker (31) so that a predetermined tray may be moved to a transportable position (P); and
second moving means (68) for moving said predetermined tray in the transportable position (P) to a first position at which a disk may be loaded and unloaded to and from said predetermined tray (42-46), a second position at which said predetermined tray (42-46) is stored in said stocker (31), and a third position at which said predetermined tray (42-46) is loaded onto said reproducing unit (90, 91)

2. The disk changer player (30) of claim 1, wherein said stocker (31) comprises:
holding means (31A, 31B) to be movably guided with a guide supporting shaft (33A, 33B) provided on a fixed chassis (40) along a stacking direction (a, ax) of said trays (42-46), and for holding the plurality of said trays (42-46) in layer stacking.

3. The disk changer player (30) of claim 2, wherein said stocker (31) further comprises:
a sliding shaft (47A-47E) to be inserted into a bearing unit (42A-46A) provided on said trays (42-46).

4. The disk changer player (30) of anyone of claims 1 to 3, wherein said first moving means (32) comprises:
a cam member (61) having an engaging cam portion (61A) which engages with a projecting supporting shaft (31E) projected from said stocker (31); and
driving means (111, 55-60, 62) for driving said cam member (61); wherein
said cam member (61) is driven by means of said driving means (111, 55-60, 62) to cause said stocker (31) to move toward a stacking direction (a, ax) of said stocker (31).

5. The disk changer player (30) of claim 4, wherein said first moving means (32) further comprises:
first detecting means (65) for detecting the position of said stocker (31).

6. The disk changer player (30) of claim 4 or 5, wherein said cam member (61) is a cam in a disk.

7. The disk changer player (30) of anyone of claims 1 to 6, wherein said second moving means (68) comprises:
engaging member (64, 64A) for engaging which selects a member (42B-46B) to be engaged provided on said plurality of trays (42-46) respectively;
a guide shaft (63) being inserted into a bearing member (64) provided on said engaging member (64, 64A) so as to guide said engaging member (64, 64A); and
driving means (112, 71-81) for moving said engaging means (64, 64A) along said guide shaft (63); wherein
said engaging member (64, 64A) is moved by means of said driving means (112, 71-81) so that said trays (42-46) stored in said stocker (31) are selectively moved over first position at where a disk is able to be loaded and unloaded to and from said tray (42-46), second position at where said tray (42-46) is stored into said stocker and third position at where said tray (42-46) is loaded into said reproducing means (90-91).

8. The disk changer player (30) of claim 7, wherein said second moving means (68) further comprises:
second detecting means (66A, 66B, 66C) for detecting the position of said engaging member (64, 64A).

9. The disk changer player (30) of anyone of claims 1 to 8, further comprising:
a polygon bearing bore is formed on said engaging member (64, 64A), and a guide shaft (63) formed by a shaft member in polygon cross section is inserted into said bearing bore to guide said engaging member (64, 64A).

10. The disk changer player (30) of anyone of claims 1 to 9, wherein said stocker (31) is movably guided along the stacking direction (a, ax) of said trays (42-46) by means of a guide supporting shaft (33A, 33B) provided on a fixing chassis (40), and a holding means holds said plurality of trays (42-46) in layer stacking.

11. The disk changer player (30) of anyone of claims 1 to 10, wherein the opening size of said opening is such a size that only one tray placed a disk recording medium on is able to pass through said opening.

## Patentansprüche

1. Plattenspieler mit Plattenwechsler (30), der ein Gehäuse hat, welches mit einer Öffnung (41) versehen ist, durch welche Schalen, auf denen jeweils Platten angeordnet werden können, ausgebreitet und zurückgezogen werden können, wobei der Plattenspieler mit Plattenwechsler (30) im Gehäuse aufweist:
eine Wiedergabeeinheit (90, 91) zum Lesen eines Aufzeichnungssignals, welches auf den Platten aufgezeichnet ist;
einen Speicher (31) zum Stapeln von mehreren Schalen (42 - 46), der zwischen der Öffnung (41) und der Wiedergabeeinheit (90, 91) angeordnet ist;
eine erste Verschiebeeinrichtung (32) zum Verschieben des Speichers (31) längs der Stapelrichtung (a, ax) des Speichers (31), so daß eine vorgegebene Schale zu einer Transportposition (P) verschoben werden kann; und
eine zweite Verschiebeeinrichtung (68) zum Verschieben der vorgegebenen Schale in die Transportposition (P) zu einer ersten Position, bei der eine Platte auf die vorgegebene Schale (42 bis 46) geladen und daraus entladen werden kann, einer zweiten Position, bei der die vorgegebene Schale (42 bis 46) im Speicher (31) gespeichert wird, und einer dritten Position, bei der die vorgegebene Schale (42 bis 46) auf die Wiedergabeeinheit (90, 91) geladen wird.

2. Plattenspieler mit Plattenwechsler (30) nach Anspruch 1, wobei der Speicher (31) umfaßt:
eine Halteeinrichtung (31A, 31B), die verschiebbar durch eine Führungslagerwelle (33A, 33B) geführt ist, die auf einem festen Chassis (40) längs einer Stapelrichtung (a, ax) der Schalen (42 bis 46) vorgesehen ist, und um die mehreren Schalen (42 bis 46) in schichtweiser Stapelung zu halten.

3. Plattenspieler mit Plattenwechsler (30) nach Anspruch 2, wobei der Speicher (31) außerdem aufweist:
eine Gleitwelle (47A - 47E), die in eine Lagereinheit (42A - 46A), die auf den Schalen (42 - 46) vorgesehen ist, eingeführt ist.

4. Plattenspieler mit Plattenwechsler (30) nach einem der Ansprüche 1 bis 3, wobei die erste Verschiebeeinrichtung (32) aufweist:
ein Nockenteil (61), das einen Eingriffsnockenabschnitt (61A) hat, der mit einer vorspringenden Lagerwelle (31E) in Eingriff ist, die aus dem Speicher (31) ragt; und
eine Ansteuereinrichtung (111, 55-60, 62), um das Nockenteil (61) anzusteuern; wobei
das Nockenteil (61) durch die Ansteuereinrichtung (111, 55 - 60, 62) angesteuert wird, um zu veranlassen, daß sich der Speicher (3i) in eine Stapelrichtung (a, ax) des Speichers (31) verschiebt.

5. Plattenspieler mit Plattenwechsler (30) nach Anspruch 4, wobei die erste Verschiebeeinrichtung (32) außerdem aufweist:
eine erste Ermittlungseinrichtung (65) zur Ermittlung der Position des Speichers (31).

6. Plattenspieler mit Plattenwechsler (30) nach Anspruch 4 oder 5, wobei das Nockenteil (61) ein Steuernockenteil (Nocken) in einer Scheibe ist.

7. Plattenspieler mit Plattenwechsler (30) nach einem der Ansprüche 1 bis 6, wobei die zweite Verschiebeeinrichtung (68) umfaßt:
ein Eingriffsteil (64, 64A) zum Eingreifen, welches ein Teil (42B - 46B) auswählt, in welches eingegriffen werden soll, welches jeweils auf den mehreren Schalen (42-46) vorgesehen ist;
eine Führungswelle (63), die in ein Lager (64) eingeführt ist, welche auf dem Eingriffsteil (64, 64A) vorgesehen ist, um das Eingriffsteil (64, 64A) zu führen; und
eine Ansteuereinrichtung (112, 71 - 81) zum Verschieben der Eingriffseinrichtung (64, 64A) längs der Führungswelle (63); wobei
das Eingriffsteil (64, 64A) durch die Ansteuereinrichtung (112, 71 - 81) verschoben wird, so daß die Schalen (42 - 46), die im Speicher (31) gespeichert sind, wahlweise über eine erste Position verschoben werden, wo eine Platte in der Lage ist, auf die Schale (42 - 46) geladen zu werden oder daraus entladen zu werden, eine zweite Position, bei der die Schale (42 - 46) im Speicher gespeichert wird, und eine dritte Position, bei der die Schale (42 - 46) auf die Wiedergabeeinrichtung (90 - 91) geladen wird.

8. Plattenspieler mit Plattenwechsler (30) nach Anspruch 7, wobei die zweite Verschiebeeinrichtung (68) außerdem aufweist:
eine zweite Ermittlungseinrichtung (66A, 66B, 66C), um die Position des Eingriffsteils (64, 64A) zu ermitteln.

9. Plattenspieler mit Plattenwechsler (30) nach einem der Ansprüche 1 bis 8, der außerdem aufweist:
eine Vieleck-Lagerbohrung, die auf dem Eingriffsteil (64, 64A) gebildet ist, und eine Führungswelle (63), die durch ein Lagerteil mit einem Vieleck-Querschnitt gebildet ist, die in die Lagerbohrung eingeführt ist, um das Eingriffsteil (64, 64A) zu führen.

10. Plattenspieler mit Plattenwechsler (30) nach einem der Ansprüche 1 bis 9, wobei der Speicher (31) verschiebbar längs der Stapelrichtung (a, ax) der Schalen (42 - 46) mittels einer Führungslagerwelle (33A, 33B) geführt ist, die auf einem festen Chassis (40) vorgesehen ist, und eine Halteeinrichtung die mehreren Schalen (42 - 46) in einer schichtweisen Stapelung hält.

11. Plattenspieler mit Plattenwechsler (30) nach einem der Ansprüche 1 bis 10, wobei die Öffnungsabmessung der Öffnung so bemessen ist, daß nur eine Schale, die einen Plattenaufzeichnungsträger trägt, in der Lage ist, die Öffnung zu passieren.

## Revendications

1. Lecteur-changeur de disques (30) possédant un boîtier qui est pourvu d'une ouverture (41) à travers laquelle on peut déployer et rétracter des plateaux sur lesquels on peut placer des disques respectifs, ledit lecteur-changeur de disques (30) comprenant dans ledit boîtier :
une unité de reproduction (90, 91) pour lire un signal d'enregistrement enregistré dans lesdits disques ;
un organe de stockage (31) pour empiler une pluralité de plateaux (42 à 46) et étant agencé entre ladite ouverture (41) et ladite unité de reproduction (90, 91) ;
des premiers moyens de déplacement (32) pour déplacer ledit organe de stockage (31) le long de la direction d'empilement (a, ax) dudit organe de stockage (31) de sorte qu'un plateau prédéterminé peut être déplacé jusqu'à une position de transport (P) ; et
des seconds moyens de déplacement (68) pour déplacer ledit plateau prédéterminé dans la position de transport (P) jusqu'à une première position à laquelle un disque peut être chargé et déchargé sur ledit plateau prédéterminé (42 à 46) et depuis celui-ci, une seconde position à laquelle ledit plateau prédéterminé (42 à 46) est stocké dans ledit organe de stockage (31), et une troisième position à laquelle ledit plateau prédéterminé (42 à 46) est chargé sur ladite unité de reproduction (90, 91).

2. Lecteur-changeur de disques (30) selon la revendication 1, dans lequel ledit organe de stockage (31) comprend:
des moyens de maintien (31A, 31B) destinés à être guidés de façon mobile avec un arbre de support de guidage (33A, 33B) prévu sur un châssis fixe (40) le long d'une direction d'empilement (a, ax) desdits plateaux (42 à 46) et pour tenir la pluralité desdits plateaux (42 à 46) suivant un empilement en couches.

3. Lecteur-changeur de disques (30) selon la revendication 2, dans lequel ledit organe de stockage (31) comprend en outre :
un arbre de coulissement (47A à 47E) destiné à être introduit dans une unité formant palier (42A à 46A) prévue sur lesdits plateaux (42 à 46).

4. Lecteur-changeur de disques (30) selon l'une quelconque des revendications 1 à 3, dans lequel lesdits premiers moyens de déplacement (32) comprennent :
un élément de came (61) ayant une partie de came d'engagement (61A) qui engage un arbre de support en projection (31E) qui se projette depuis ledit organe de stockage (31); et
des moyens d'entraînement (111, 50 à 60, 62) pour entraîner ledit élément de came (61); dans lequel
ledit élément de came (61) est entraîné au moyen desdits moyens d'entraînement (111, 50 à 60, 62) pour amener ledit organe de stockage (31) à se déplacer vers une direction d'empilement (a, ax) dudit organe de stockage (31).

5. Lecteur-changeur de disques (30) selon la revendication 4, dans lequel lesdits premiers moyens de déplacement (32) comprennent en outre :
des premiers moyens de détection (65) pour détecter la position dudit organe de stockage (31).

6. Lecteur-changeur de disques (30) selon l'une ou l'autre des revendications 4 et 5, dans lequel ledit élément de came (61) est une came dans un disque.

7. Lecteur-changeur de disques (30) selon l'une quelconque des revendications 1 à 6, dans lequel lesdits seconds moyens de déplacement (68) comprennent :
un élément d'engagement (64, 64A) pour l'engagement, qui choisit un élément (42B à 46B) à engager prévu respectivement sur ladite pluralité de plateaux (42 à 46);
un arbre de guidage (63) qui est introduit dans un élément de palier (64) prévu sur ledit élément d'engagement (64, 64A) de manière à guider ledit élément d'engagement (64, 64A) ; et
des moyens d'entraînement (112, 71 à 81) pour déplacer lesdits moyens d'engagement (64, 64A) le long du dite arbre de guidage (63); dans lesquels
ledit élément d'engagement (64, 64A) est déplacé au moyen desdits moyens d'entraînement (112, 71 à 81) de manière que lesdits plateaux (42 à 46) stockés dans ledit organe de stockage (31) sont sélectivement déplacés entre une première position à laquelle un disque est capable d'être chargé et déchargé sur ledit plateau (42 à 46) et depuis celui-ci, une seconde position à laquelle ledit plateau (42 à 46) est stocké dans ledit organe de stockage, et une troisième position à laquelle ledit plateau (42 à 46) est chargé dans lesdits moyens de reproduction (90, 91).

8. Lecteur-changeur de disques (30) selon la revendication 7, dans lequel lesdits seconds moyens de déplacement (68) comprennent en outre:
des seconds moyens de détection (66A, 66B, 66C) pour détecter la position dudit élément d'engagement (64, 64A).

9. Lecteur-changeur de disques (30) selon l'une quelconque des revendications 1 à 8, comprenant en outre :
un perçage formant palier polygonal formé sur ledit élément d'engagement (64, 64A), et un arbre de guidage (63) formé par un élément d'arbre à section polygonale, qui est introduit dans ledit perçage formant palier afin de guider ledit élément d'engagement (64, 64A).

10. Lecteur-changeur de disques (30) selon l'une quelconque des revendications 1 à 9, dans lequel ledit organe de stockage (31) est guidé en déplacement le long de la direction d'empilement (a, ax) desdits plateaux (42 à 46) au moyen d'un arbre de support de guidage (33A, 33B) prévu sur un châssis de fixation (40), et des moyens de maintien qui maintiennent ladite pluralité de plateaux (42 à 46) dans un empilement par couches.

11. Lecteur-changeur de disques (30) selon l'une quelconque des revendications 1 à 10, dans lequel la taille d'ouverture de ladite ouverture est telle que seul un plateau placé avec un support d'enregistrement à disque sur lui est capable de traverser ladite ouverture.
